## Europäisches Patentamt

(19) **European Patent Office**

**Office européen des brevets**

(11) Veröffentlichungsnummer: **0 141 986**

**B1**

(12) # EUROPÄISCHE PATENTSCHRIFT

(45) Veröffentlichungstag der Patentschrift:
25.02.87

(51) Int. Cl.⁴: **F 16 L 59/16,** F 16 L 59/02

(21) Anmeldenummer: **84111515.7**

(22) Anmeldetag: **27.09.84**

(54) **Gehäuse für wärmeisolierte Armaturen und/oder Flanschverbindungen.**

(30) Priorität: **25.10.83 DE 3338633**

(43) Veröffentlichungstag der Anmeldung:
**22.05.85 Patentblatt 85/21**

(45) Bekanntmachung des Hinweises auf die Patenterteilung:
**25.02.87 Patentblatt 87/9**

(84) Benannte Vertragsstaaten:
**AT BE CH FR GB IT LI LU NL SE**

(56) Entgegenhaltungen:
**WO-A-83/03458**
**CA-A-906 980**
**FR-A-2 465 947**
**GB-A-1 363 076**
**US-A-4 298 554**

(73) Patentinhaber: **Jacobs, Ludwig, Lagesche Strasse 8, D-4790 Paderborn (DE)**

(72) Erfinder: **Jacobs, Ludwig, Lagesche Strasse 8, D-4790 Paderborn (DE)**

(74) Vertreter: **Beyer, Rudi, Patentanwalt Dipl.- Ing. Rudi Beyer Am Dickelsbach 8, D-4030 Ratingen 6 (Hösel) (DE)**

## Beschreibung

Die Erfindung betrifft ein Gehäuse für wärmeisolierte Armaturen und/oder Flanschverbindungen, mit zwei kastenförmigen Gehäuseteilen mit vorzugsweise zwei Öffnungen für die Rohrleitungen und insbesondere einer weiteren Öffnung für die aus dem Gehäuse herausgeführte Betätigungsvorrichtung der Armatur, wobei die Gehäuseteile benachbart der Gehäuseteilungsebene wenigstens je einen Flansch aufweisen und die Gehäuseteile durch Schrauben lösbar miteinander verbunden sind, die durch Umfangsabschnitte der Gehäuseteile in Form von Befestigungsflansche greifen, wobei den Gehäuseteilen ihre Einbaulage zueinander zentrierende bzw. bestimmende, formschlüssig ineinandergreifende, mit den Gehäuseteilen einstückig verbundene Zentriermittel zugeordnet sind, die nach Art einer Nut-Feder-Verbindung ausgestaltet sind und die sich über zumindest Teile des Umfanges der Gehäuseteile erstrecken.

Ein derartiges Gehäuse ist durch die US-A-3 724 491 vorbekannt. Dieses Gehäuse besitzt den Nachteil, daß es wegen der Vielzahl der Befestigungsschrauben nur schwer zu montieren und zu demontieren ist. An der jeweils verdeckten Rückseite des Gehäuses lassen sich bei beengten Raumverhältnissen die Schrauben überhaupt nicht montieren, so daß dieses Gehäuse nur dort eingesetzt werden kann, wo allseitig ausreichend Raum zum Montieren und Demontieren zur Verfügung steht.

Ausgehend von einem Gehäuse gemäß dem Anspruchsoberbegriff des Patentanspruches 1 liegt der Erfindung die Aufgabe zugrunde, ein Gehäuse dieser Art so auszubilden, daß es leicht und schnell auch unter engen Raumverhältnissen montier- und demontierbar ist.

Diese Aufgabe wird durch die kennzeichnenden Merkmale des Patentanspruches 1 gelöst.

Dadurch, daß die Befestigungsflansche jeweils rechtwinklig zur Gehäusemantelfläche nach innen in das einteilige Gehäuse hineingerichtet sind und planparallel aufeinanderliegen, sind bei dem erfindungsgemäßen Gehäuse an der Außenseite keinerlei störenden Teile vorhanden. Dadurch baut ein erfindungsgemäßes Gehäuse relativ klein in seinen Außenabmessungen. Auch stehen keine scharfen Kanten nach außen hervor, an denen Verletzungen möglich wären.

Durch die nur an einer Seite angebrachten Schrauben lassen sich die Gehäuseteile in ihre Zentriermittel gegeneinander ziehen, so daß sich eine besonders stabile, unverrückbare Lage der Gehäuseteile nicht nur in achsialer Richtung, sondern auch quer dazu ergibt. Die Zugänglichkeit dieser Befestigungsschrauben ist immer gegeben, da sie stets so angeordnet werden können, daß sie sich an der gut zugänglichen Seite befinden.

Durch die Zentriermittel können die Gehäuseteile gewissermaßen "blind", und zwar auch in engen Raumecken, in eine funktionsgerechte Lage gebracht und montiert werden. Die Gehäuseteile werden dabei praktisch über den gesamten Umfang des Gehäuses achsial und radial zentriert und können sich nicht z. B. quer gegeneinander verschieben. Dadurch erhält das Gehäuse insgesamt ein geschlossenes, formschönes, akkurates Äußeres, auf dem sich wenig Schmutz ansetzen kann. Zusammen mit den Befestigungsschrauben lassen sich dabei die Gehäuseteile so dicht gegeneinander ziehen, daß die Gehäuseteile gewissermaßen fugenlos gegeneinander anliegen.

Alles in allem ergibt sich eine robuste Konstruktion.

Die Zentriermittel lassen sich bei der Fertigung des Gehäuses problemlos mit anformen. Dies gilt sowohl für Gehäuse aus einem metallischen Werkstoff, z. B. aus Blech, als auch für Kunststoff-Gehäuseteile.

In Patentanspruch 2 ist eine Ausführungsform beschrieben, bei welcher die Zentriermittel einerseits eine gute Zentrierung der Gehäuseteile durch formschlüssiges Ineinandergreifen trapezförmig gestalteter Nuten und Sicken ermöglichen, andererseits weisen solche Zentriermittel auch ein hohes Widerstandsmoment gegen Verformung auf, so daß selbst bei relativ hohen Querbeanspruchungen, die gegen ein erfindungsgemäßes Gehäuse einwirken könnten, z. B. durch Stoß oder Schlag, keine Relativverschiebung der Gehäuseteile zueinander stattfinden kann. Vielmehr bleiben die Gehäuseteile schon nach dem Ineinandergreifen der Zentriermittel in fluchtender Lage zueinander.

Gemäß Patentanspruch 3 sind die Befestigungsschrauben unverlierbar mit mindestens einem der Gehäuseteile verbunden. Dadurch können auch nach mehrmaliger Demontage des Gehäuses die Befestigungsmittel nicht verlorengehen, z. B. nicht in engen Kellerräumen auf den Boden fallen. Durch die besondere Ausgestaltung der Schraubenlöcher wird sichergestellt, daß auch lange Befestigungsschrauben zuverlässig in Richtung auf die in den Flanschen vorgesehenen Schraublöcher eingeführt werden, so daß keine langen Such- und/oder Anpaßarbeiten erforderlich sind, um die Schrauben in eine paßgerechte Lage zu bringen, um sie anziehen zu können.

Aus Patentanspruch 4 ist eine weitere Ausführungsform ersichtlich. Bei dieser greifen auf diametral einander gegenüberliegenden Seiten Teile des Gehäusemantels jedes Gehäuseteil laschenförmig übereinander, so daß sich schon vor dem Ineinandergreifen der Nut-Feder-Verbindung wie auf einer Führungsschiene eine Vorabzentrierung und Führung der Gehäuseteile, gewissermaßen einige Millimeter oder einige Zentimeter vor dem Ineinandergreifen der Nut-Feder-Verbindung, ergibt. Auf diese Weise wird eine weitere Erleichterung der Montage der Gehäuseteile erzielt. Außerdem ist hierdurch eine stabile Konstruktion gegeben.

In der Zeichnung ist die Erfindung - teils schematisch - an Ausführungsbeispielen veranschaulicht. Es zeigen:

Fig. 1 ein Gehäuse gemäß der Erfindung in Einbaullage an einem Absperrschieber, teils im Längsschnitt, teils in der Ansicht;

Fig. 2 ein erfindungsgemäßes Gehäuse in Explosionsdarstellung, ohne Aussparungen für Rohrleitungen bzw. Betätigungseinrichtungen für eine Armatur;

Fig. 3 einen Querschnitt (Horizontalschnitt) durch ein erfindungsgemäßes Gehäuse, wobei die Gehäuseteile zur deutlicheren Darstellung allerdings nicht miteinander verschraubt, sondern mit Spaltabstand zueinander angeordnet sind;

Fig. 4 Einen Längsschnitt (Vertikalschnitt) durch ein erfindungsgemäßes Gehäuse, wobei die Gehäuseteile wiederum mit Spaltabstand zueinander, also nicht in Montagelage angeordnet dargestellt sind, und zwar ohne Öffnungen für den Durchtritt der Leitungen und ggf. für den Durchtritt von Betätigungseinrichtungen für eine Armatur;

Fig. 5 eine Einzelheit aus einem erfindungsgemäßen Gehäuse, in größerem Maßstab;

Fig. 6 eine Ausführungsform teils in der Ansicht, teils im Schnitt und

Fig. 7 eine Draufsicht zu Fig. 6, teils im Schnitt.

In der Zeichnung ist mit dem Bezugszeichen 1 insgesamt ein Gehäuse bezeichnet, das aus den beiden Gehäuseteilen 2 bzw. 3 besteht. Das Gehäuse 1 kann je nach Bedarf quer oder längsgeteilt ausgebildet sein, was für sämtliche im Rahmen des Erfindungsgedankens (Aufgabe und Lösung) liegenden Ausführungsformen gilt.

Bei den aus der Zeichnung ersichtlichen Ausführungsformen bestehen die Gehäuseteile aus Blech und sind jeweils materialmäßig einstückig geformt.

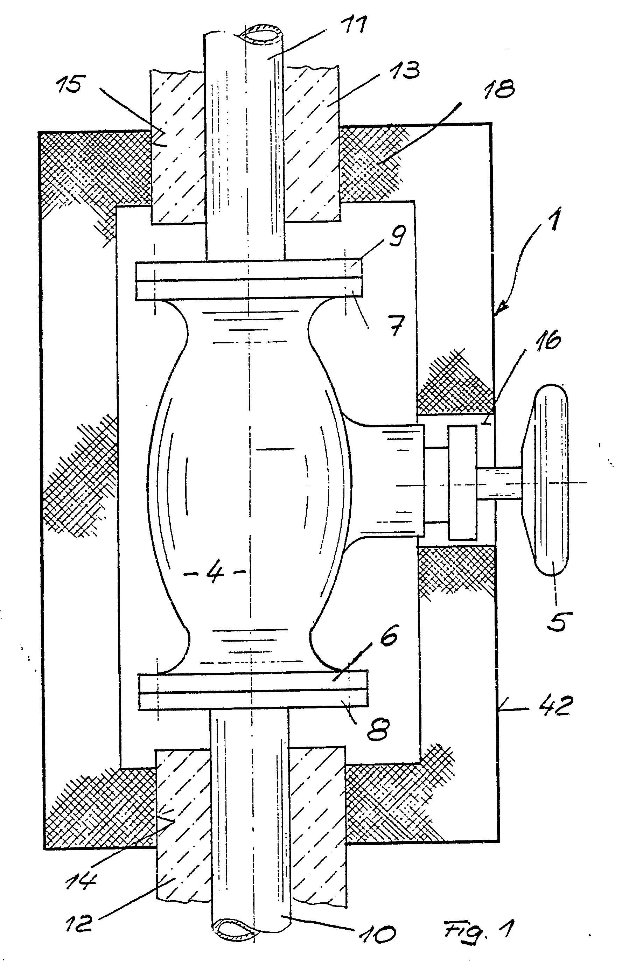

Wie die Fig. 1 erkennen läßt, kann ein Gehäuse 1 eine Armatur 4 umschließen. Diese Armatur 4 ist bei der aus Fig. 1 ersichtlichen Ausführungsform als Absperrschieber ausgebildet, dem eine Betätigungsvorrichtung 5 mit Handrad und Spindel zugeordnet ist, um das nicht dargestellte Absperrorgan in Offen- und Schließstellung bewegen zu können. Die Armatur 4 weist auf gegenüberliegenden Seiten koaxial zueinander angeordnete Flansche 6 und 7 auf, die mit entsprechend ausgestalteten Flanschen 8 bzw. 9 von Leitungen 10 bzw. 11 druckmitteldicht verbunden sind. Diese Leitungen 10 bzw. 11 sind durch Isolierstücke 12 bzw. 13 im Bereich der stirnseitig im Gehäuse 1 ausgesparten Durchtrittsöffnungen 14 bzw. 15 wärmeisoliert. Bei längsgeteiltem Gehäuse 1 sind die Durchtrittsöffnungen 14 bzw. 15 etwa je zur Hälfte in den entsprechenden Gehäusehälften 2 bzw. 3 angeordnet, so daß sich beim Zusammenlegen der Gehäuseteile 2 und 3 die Aussparungen zu den Durchtrittsöffnungen 14 bzw. 15 ergänzen. Die Durchtrittsöffnungen 14 und 15 sind bei der aus Fig. 1 ersichtlichen Ausführungsform koaxial zueinander angeordnet.

Des weiteren weist das Gehäuse 1 eine Durchtrittsöffnung 16 auf, durch die die Betätigungsvorrichtung 5 für die Armatur 4 hindurchtritt. Erforderlichenfalls kann die Durchtrittsöffnung 16 ebenfalls noch durch ein Isolierstück spaltfrei nach außen hin wärmeisoliert sein.

Das Gehäuse 1 ist innen mit einer integrierten Wärmeisolierung 18 ausgekleidet, die z. B. aus einem geeigneten Kunststoffschaum, z. B. aus Polyurethan o. dgl., oder aus eingeklebten Isoliermatten bestehen kann.

Bei der aus den Figuren 1 bis 5 ersichtlichen Ausführungsform weisen die Gehäuseteile 2 und 3 auf jeweils einander gegenüberliegenden Seiten jeweils in der gleichen Ebene liegend je zwei durchlaufende Befestigungsflansche 19, 20 bzw. 21 und 22 auf, die in Einbaulage miteinander korrespondieren und in Einbaulage zueinander fluchtende Löcher 23, 24 bzw. 25, 26 besitzen, deren Ausbildung und Funktion weiter unten im einzelnen noch erläutert wird. Die Befestigungsflansche 19, 20 bzw. 21, 22 sind jeweils rechtwinklig zur Mantelfläche nach innen gerichtet, so daß beim Aufeinanderliegen der Gehäuseteile 2 und 3 die Flansche 19, 20 bzw. 21, 22 planparallel aufeinander zu liegen kommen.

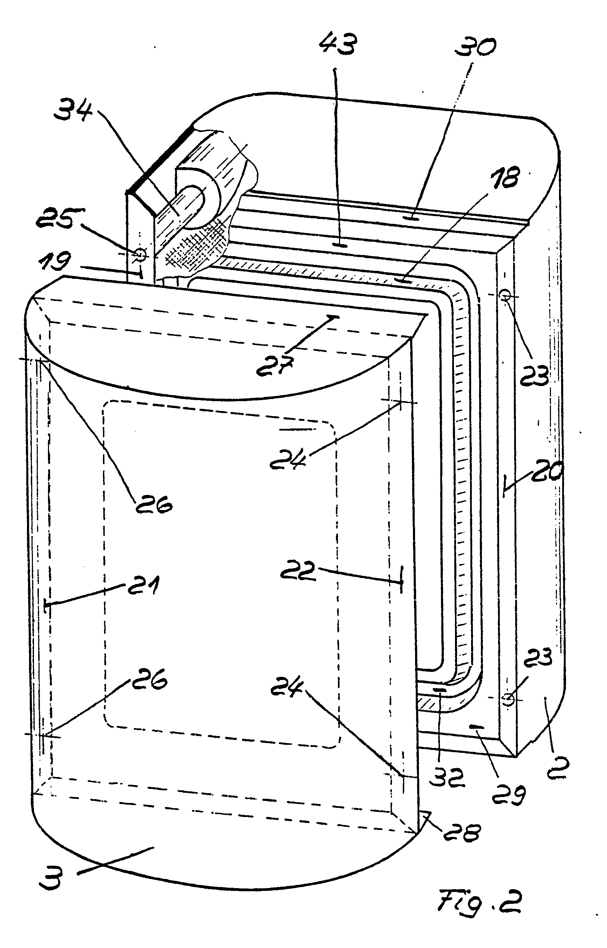

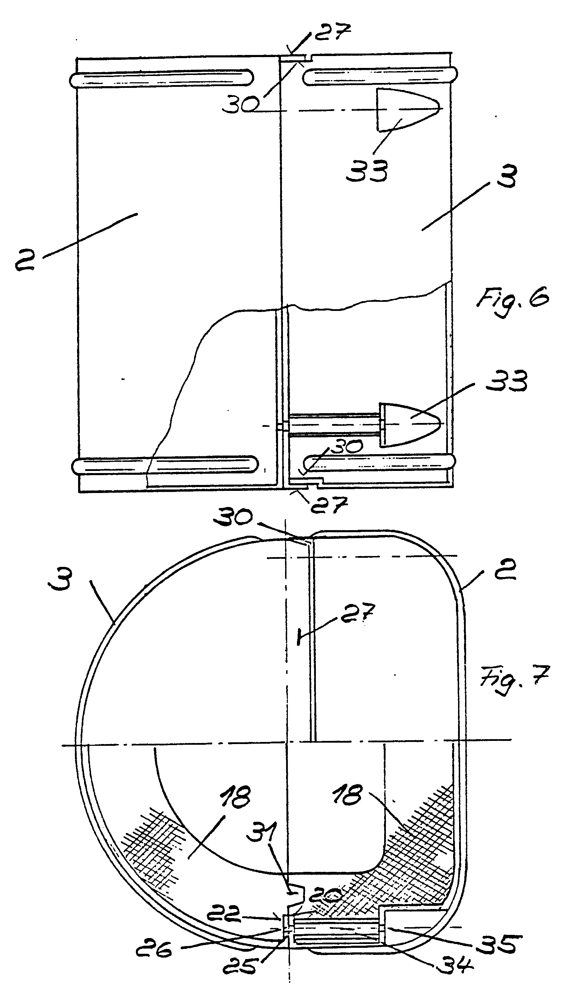

Des weiteren lassen insbesondere die Figuren 2, 6 sowie 7 deutlich erkennen, daß das Gehäuseteil 3 mit vorspringenden Wandungsteilen 27 bzw. 28 entsprechend zurückversetzte Wandungsteile 29 bzw. 30 des Gehäuseteils 2 laschenförmig übergreift (Fig. 6). Die Ausbildung und Anordnung kann aber auch so getroffen werden, daß die Wandungsteile 27 bis 30 entfallen und die Gehäuseteile 2, 3 in diesen Bereichen stumpf gegeneinander randseitig anliegen. Des weiteren liegen im Rahmen des Erfindungsgedankens auch Ausführungsformen, bei denen die Befestigungsflansche 19, 20 bzw. 21, 22 umlaufend ausgebildet sind und planparallel satt aufeinander anliegen, sei es bei Ausführungsformen, bei denen - wie aus Fig. 2 und 6 ersichtlich - Wandungsteile 27, 28 bzw. 30, 29 sich laschenförmig übergreifen, sei es, daß diese laschenförmig übergreifenden Wandungsteile entfallen.

Bei der Ausführungsform nach den Figuren 1 bis 5 ist das Gehäuseteil 3 mit einem ringförmig umlaufenden, also ununterbrochenen, im Querschnitt etwa trapezförmigen Vorsprung 31 versehen, dem eine formmäßig angepaßte, nutförmige bzw. sickenartige Vertiefung 32 zugeordnet ist, in die der Vorsprung 31 in Einbaulage der Gehäuseteile 2 und 3 formschlüssig und fugendicht eingreift. Der Vorsprung 31 und die Vertiefung 32 stellen nach Art einer Nut-Feder-Verbindung ausgestaltete Zentriermittel dar, die die Gehäuseteile 2 und 3 radial und axial zueinander ausrichten und in gewisser Hinsicht auch fixieren.

Bei der Ausführungsform nach den Figuren 6 und 7 ist der Vorsprung 31 am Gehäuseteil 3 angeordnet, während sich die nutartige Vertiefung an dem Gehäuseteil 2 befindet.

Sowohl der Vorsprung 31 als auch die Nut 32 sind mit dem jeweiligen Gehäuseteil 3 bzw. 2 materialmäßig einstückig ausgebildet, was z. B. durch entsprechende Verformung eines Blechteils oder durch Anspritzen oder Angießen, beispielsweise bei Herstellung der Gehäuseteile 2 und 3 aus Kunststoff, geschehen kann.

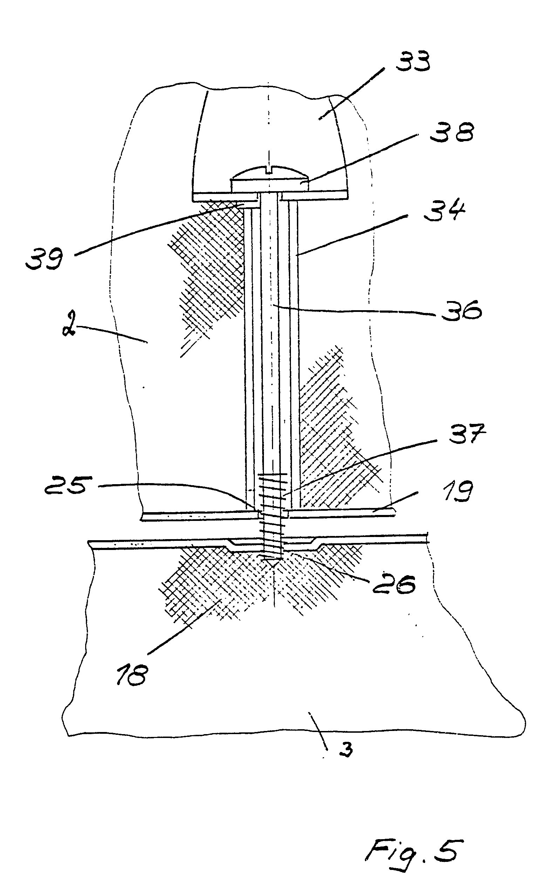

Deutlich ist aus Fig. 5 zu ersehen, daß das Gehäuseteil 2 bei der Ausführungsform nach den Figuren 1 bis 5 eine sickenförmige Einformung 33 für jede Bohrung 23, 25 aufweist. Diese sickenförmige Einformung 33 ist jeweils praktisch koaxial zu einer der Bohrungen 23 bzw. 25 angeordnet, wobei aus Gründen der Übersichtlichkeit im Zusammenhang mit Fig. 5 lediglich die Ausbildung und Anordnung für den Flansch 19 und die Bohrungen 25 erörtert worden ist. Die Ausbildung und Anordnung der übrigen Bohrungen, Sicken und Befestigungsschrauben ist die gleiche wie nachfolgend und im Zusammenhang mit Fig. 5 beschrieben.

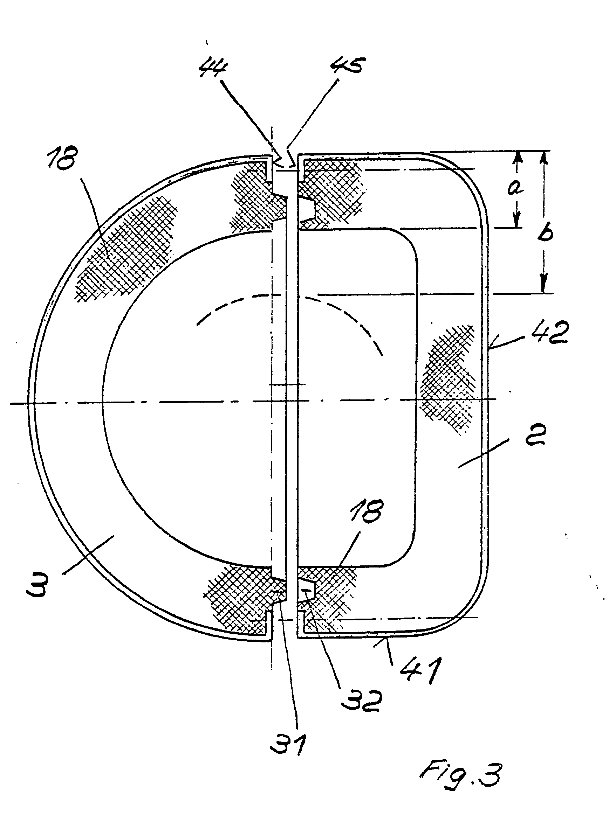

Die Bohrung 25 ist koaxial zu einer Führungshülse 34 angeordnet, die koaxial zu der betreffenden Bohrung, vorliegend 25, verläuft und an ihrem einen Ende in die Bohrung 25 des Flansches 19 und am anderen Ende über eine Bohrung 35 in die sickenförmige Ausformung 33 ausmundet. Die der Bohrung 25 gegenuberliegende Bohrung 26 des Befestigungsflansches 21 ist mit Gewinde versehen bzw. so eng bemessen, daß z. B. eine Blechschraube, eine selbstschneidende Schraube o. dgl. als Befestigungsschraube 36 den Befestigungsflansch 21 beim Einschrauben gegen den Befestigungsflansch 19 spaltdicht zieht. Die Gewindegänge der Befestigungsschraube 36 erstrecken sich nur über einen Teil der Länge der Befestigungsschraube 36 und sind mit dem Bezugszeichen 37 bezeichnet. 38 ist der Kopf der Befestigungsschraube 36, der vorliegend als Schlitzschraube ausgebildet ist. Diese Befestigungsschraube 36 und alle anderen Befestigungsschrauben 36 sind durch eine Schraubensicherung 39 im Bereich der Bohrung 35 unverlierbar mit dem Gehäuseteil 3 verbunden. Selbstverständlich kann die Anordnung auch umgekehrt getroffen sein, also es können z. B. die vorstehend im Zusammenhang mit Fig. 5 beschriebenen sickenförmigen Ausformungen 33, Führungshülsen 34 und Gewinde in den Bohrungen 26 an dem jeweils anderen Gehäuseteil 3 vorgesehen sein. Die Zeichnung läßt außerdem erkennen, daß eines der Gehäuseteile auf diametral einander gegenüberliegenden Seiten 40 und 41 und auf einer dazu senkrecht stehenden Seite 42 durch flache Wandungen begrenzt sind. Diese letzte flache Wandung 42 wird bevorzugt für die Seite angewandt, auf der die Betätigungseinrichtung 5 für eine Armatur aus dem Gehäuse 1 heraustritt. Demgegenüber ist das andere Gehäuse 3 bei sämtlichen dargestellten Ausführungsformen an seiner Außenseite nach einem Kreisbogen verlaufend geformt und verläuft nach diesem Kreisbogen bis zu den Befestigungsflanschen 21 und 22 (Figuren 2, 3).

In Fig. 3 ist mit den Buchstaben a die minimale Isolierdicke mit dem Buchstaben b die maximale Isolierdicke der Isolierung 18 für die Gehäuseteile 2 und/oder 3 angedeutet.

Man erkennt leicht, daß sich die Gehäuseteile 2 und 3 außerordentlich einfach und schnell in eine funktionsgerechte Lage um eine Armatur 4 anordnen lassen. Zu diesem Zweck brauchen lediglich die Befestigungsschrauben 36 gelöst zu werden. Alsdann lassen sich die Gehäuseteile 2 und 3 entfernen. Wartungs- und/oder Reparaturarbeiten sind dann rasch und problemlos an der betreffenden Armatur binding 31, 32 eine rasche und problemlose Zentrierung der Gehäuseteile 2 und 3 sicher. Da die Befestigungsschrauben 36 unverlierbar mit einem der Gehäuseteile, z. B. mit dem Gehäuseteil 3 verbunden sind, lassen sich durch Anziehen der Befestigungsschrauben 36 die Gehäuseteile 2 und 3 wieder in ihre paßgerechte Funktionslage arretieren.

Aus Fig. 2 ist noch ersichtlich, daß das Gehäuseteil 2 oben und/oder unten noch jeweils einen quer zu den Befestigungsflanschen 19 und 20 verlaufenden Versteifungsflansch 43 aufweist.

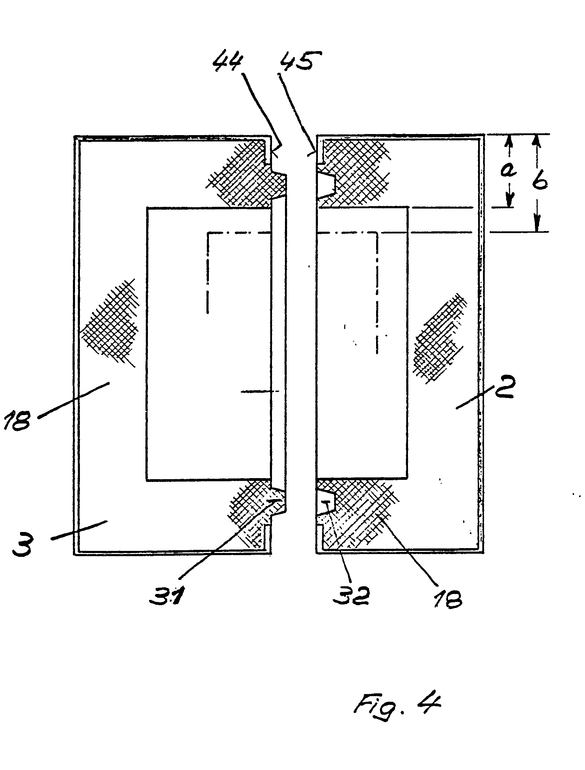

Die Figuren 3 und 4 lassen erkennen, daß es außerdem möglich ist, die Flanschen als umlaufende Flanschen 44 und 45 auszubilden, wobei z. B. jeweils gegenüberliegende Flanschabschnitte, z.B. in dem Flansch 44 die Befestigungslöcher zum Eingreifen der Schrauben vorgesehen sein können. Dabei ist es denkbar, nur jeweils einen Teil der Flanschen 44 mit Bohrungen bzw. Löchern zum Eingreifen von Befestigungsschrauben 36 auszubilden.

Im Rahmen des Erfindungsgedankens liegen auch Ausführungsformen, bei denen die Flanschen 19, 20 bzw. 43 bzw. 44, 45 unterbrochen ausgebildet sind, also hier nur laschenförmige Flanschteile vorgesehen sind. Auch diese beschriebenen Flansche können materialmäßig einstückig oder funktionell einstückig mit dem jeweiligen Gehäuseteil 2 bzw. 3 ausgebildet sein.

**Bezugszeichenliste**

1 Gehäuse
2 Gehäuseteil
3 "
4 Armatur, Absperrschieber
5 Betätigungsvorrichtung
6 Flansch
7 "
8 "
9 "
10 Leitung
11 "
12 Isolierstück

13 "
14 Durchtrittsöffnung
15 "
16 "
17
18 Wärmeisolierung
19 Befestigungsflansch
20 "
21 "
22 "
23 Loch, Bohrung
24 "   "
25 "   "
26 "   "
27 Wandungsteil
28 "
29 "
30 "
31 Vorsprung
32 Vertiefung, Sicke
33 Einformung
34 Führungshülse
35 Bohrung
36 Befestigungsschraube
37 Gewinde
38 Schraubkopf
39 Schraubensicherung
40 Seite
41 "
42 "
43 Versteifungsflansch
44 Flansch, Befestigungsflansch-45 "
a minimale Isolierdicke
b maximale "

**Patentansprüche**

1. Gehäuse für wärmeisolierte Armaturen und/oder Flanschverbindungen, mit zwei kastenförmigen Gehäuseteilen (2, 3) mit vorzugsweise zwei Öffnungen für die Rohrleitungen (10, 11) und insbesondere einer weiteren Öffnung (16) für die aus dem Gehäuse herausgeführte Betätigungsvorrichtung (5) der Armatur, wobei die Gehäuseteile (2, 3) benachbart der Gehäuseteilungsebene wenigstens je einen Flansch (6, 7) aufweisen und die Gehäuseteile (2, 3) durch Schrauben (36) lösbar miteinander verbunden sind, die durch Umfangsabschnitte der Gehäuseteile in Form von Befestigungsflansche (19, 20 bzw. 21, 22) greifen, wobei den Gehäuseteilen ihre Einbaulage zueinander zentrierende bzw. bestimmende, formschlüssig ineinandergreifende, mit den Gehäuseteilen einstückig verbundene Zentriermittel (31, 32) zugeordnet sind, die nach Art einer Nut-Feder-Verbindung ausgestaltet sind und die sich über zumindest Teile des Umfanges der Gehäuseteile erstrecken, <u>dadurch gekennzeichnet</u>, daß

a) die Befestigungsflansche (19, 20, bzw. 21, 22) jeweils rechtwinklig zur Gehäusemantelfäche nach innen in das jeweilige Gehäuseteil (2, 3) hineingerichtet sind und planparallel aufeinander liegen;

b) daß die Zentriermittel (31, 32) aus mindestens einer umlaufenden Nut- und Federverbindung (31, 32) bestehen und die Gehäuseteile (2, 3) radial und axial zueinander ausrichten und zentrieren;

c) daß den Befestigungsflanschen (19 bzw. 20) gegenüberliegend am Gehäuseteil (2) sickenförmige Ausprägungen (33) angeordnet sind, die mit Führungshülsen (34) zusammenwirken, durch die jeweils eine Befestigungsschraube (36) hindurchgreift, die nur an ihrem Endabschnitt mit einem Gewinde (37) versehen ist, das in die Bohrung (26) des zugehörigen Befestigungsflansches (21 bzw. 22) am anderen Gehäuseteil (3) einschraubbar ist.

2. Gehäuse nach Anspruch 1, <u>dadurch gekennzeichnet</u>, daß die Feder (31) und die Nut (32) im Querschnitt trapez- bzw. keilförmig gestaltet sind.

3. Gehäuse nach Anspruch 1 oder 2, <u>dadurch gekennzeichnet</u>, daß die Befestigungsschrauben (36) mit dem betreffenden Gehäuseteil (2 bzw. 3) unverlierbar, z. B. durch eine Schraubensicherung (39), verbunden sind.

4. Gehäuse nach Anspruch 1 oder einem der folgenden, <u>dadurch gekennzeichnet</u>, daß sich gegenüberliegende Ränder des Gehäusemantels (27, 30 bzw. 28, 29) laschenförmig übergreifen.

**Claims**

1. Housing for heat insulated fittings and/or flange connections, with two box-shaped housing sections (2, 3) with preferably two openings for the pipelines (10, 11) and especially one additional opening (16) for the actuating device (5) of the fitting, projecting out of the housing, with the housing sections (2, 3) next to the housing partition level having at least one flange each (6, 7) and the housing sections (2, 3) being releasably connected by bolts (36), which engage through circumferential sections of the housing components shaped like fixing flanges (19, 20 or 21, 22), with the housing sections centering against each other in their installation position, and having determining, positively engaging centering media (31, 32) which are linked as one part with the housing components, designed like a groove-and-tongue joint and which extend at least over part of the circumference of the housing components, <u>characterised</u>, in that

a) the fixing flanges (19, 20 or 21, 22) are each located at right angles to the housing cover surface inwards in the particular housing section (2, 3) and are plane parallel to each other;

b) the centering media (31, 32) consisting at least of one circumferential groove-and-tongue joint (31, 32), and the housing sections (2, 3) are radially and axially aligned to each other and are centering;

c) the fixing flanges (19 or 20) opposite to the housing section (2) have crimp-shaped embossings (33), which act together with guide sleeves (34), through each of which a fixing bolt (36) engages, which only has a thread (37) on its end section, which can be screwed in the bore (26) of the associated fixing flange (21 or 22) in the other housing section (3).

2. Housing according to Claim 1, <u>characterised</u> by the groove (31) and the tongue (32) being cross-sectionally of a trapezoidal or wedge shape.

3. Housing according to Claim 1 or 2, <u>characterised</u> by the fixing bolts (36) being permanently connected with the pertinent housing section (2 or 3), e.g. by means of a screw lock (39).

4. Housing according to Claim 1, or one of the following claims, <u>characterised</u> by the opposing edges of the housing cover (27, 30 or 28, 29) engaging like shackles.


## Revendications

1. Corps pour robinetteries et/ou brides calorifugées composé de deux éléments en forme de caissons (2, 3) comportant de préférence deux orifices pour les tuyauteries (10, 11) et notamment un orifice supplémentaire (16) pour le dispositif de commande (5) de l'appareil de robinetterie dont le tube de raccordement sort du corps. Chacun des éléments du corps (23) présente au voisinage de son plan de jonction au moins une bride (6, 7) et les éléments du corps (2, 3) sont assemblés de manière amovible par des vis (36) qui s'engagent à travers des segments circonférentiels des éléments du corps sous forme de brides (19, 20 et 21, 22) de fixation. Les éléments du corps portent des moyens de centrage (31, 32) formant un seul bloc avec ceux-ci, s'emboîtant d'une façon complémentaire pour déterminer ou centrer l'une par rapport à l'autre les positions des deux éléments du corps, ces moyens de centrage étant conçus comme un emboîtement mâle et femelle et s'étendant au moins partiellement sur le pourtour des éléments du corps, caractérisé en ce que

a) les brides de fixation (19, 20 et 21, 22) sont orientées vers l'intérieur de l'élément du corps respectif (2, 3) perpendiculairement à la génératrice du corps, et ont des faces de jonction planes et parallèles.

b) en ce que les moyens de centrage (31, 32) se composent d'au moins un emboîtement double circulaire (31, 32) et alignent et centrent les éléments de corps (2, 3) radialement et axialement l'un dans l'autre.

c) en ce qu'on a prévu en face des brides de fixation (19 et 20), sur l'élément de corps (2), des évidements (33) coopérant avec des douilles de guidage (34) à travers lesquelles passe une vis de fixation (36) comportant un filetage (37) uniquement à son extrémité, filetage pouvant se visser dans le trou taraudé (26) de la bride de fixation correspondante (21 ou 22) sur l'autre élément du corps (3).

2. Corps selon revendication 1, caractérisé en ce que la languette (31) et la rainure (32) ont une section trapézoïdale ou conique.

3. Corps selon revendication 1 ou 2, caractérisé en ce que les vis de fixation (36) sont reliées à l'élément du corps (2 ou 3) correspondant d'une manière imperdable par exemple par un organe d'arrêt (39).

4. Corps selon revendication 1, ou l'une des revendications suivantes, caractérisé en ce que les bords opposés de l'enveloppe du corps (27, 30 et 28, 29) se recouvrent à la manière d'un couvre-joint.

Fig. 1

Fig. 2

Fig.3

Fig. 4

Fig. 5

Fig. 6

Fig. 7